(19)

Europäisches
Patentamt
European
Patent Office
Office européen
des brevets

(11) **EP 4 640 879 A1**

(12) **EUROPEAN PATENT APPLICATION**
published in accordance with Art. 153(4) EPC

(43) Date of publication:
**29.10.2025 Bulletin 2025/44**

(21) Application number: 23907634.2

(22) Date of filing: **15.12.2023**

(51) International Patent Classification (IPC):
$C22C\ 38/02^{(2006.01)}$      $C22C\ 38/04^{(2006.01)}$
$C22C\ 38/06^{(2006.01)}$      $C22C\ 38/00^{(2006.01)}$
$C21D\ 8/12^{(2006.01)}$      $C21D\ 9/46^{(2006.01)}$

(52) Cooperative Patent Classification (CPC):
C21D 8/12; C21D 9/46; C22C 38/00; C22C 38/02;
C22C 38/04; C22C 38/06; H01F 1/147

(86) International application number:
**PCT/KR2023/020821**

(87) International publication number:
**WO 2024/136349 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2022 KR 20220181113**

(71) Applicant: POSCO Co., Ltd
**Pohang-si, Gyeongsangbuk-do 37859 (KR)**

(72) Inventors:
• JOO, Hyung-Don
  **Pohang-si, Gyeongsangbuk-do 37877 (KR)**
• LEE, Sang-Woo
  **Pohang-si, Gyeongsangbuk-do 37877 (KR)**
• PARK, June-Soo
  **Pohang-si, Gyeongsangbuk-do 37877 (KR)**
• HONG, Jae-Wan
  **Gwangyang-si, Jeollanam-do 57807 (KR)**

(74) Representative: **Meissner Bolte Partnerschaft
mbB
Patentanwälte Rechtsanwälte
Postfach 86 06 24
81633 München (DE)**

(54) **NON-ORIENTED ELECTRICAL STEEL SHEET AND METHOD FOR MANUFACTURING SAME**

(57)    Provided are a non-oriented electrical steel sheet and a method for manufacturing same. This non-oriented electrical steel sheet contains, in wt%, 2.2-4.5% of Si, 1.0% or less (excluding 0%) of Mn, 0.020-0.100% of Al, 0.10-0.30% of Sn, 0.0005-0.0100% of As, 0.0005-0.0150% of Bi, 0.0050% or less (excluding 0%) of C, 0.0030% or less of S, and 0.0050% or less of N, with the remainder comprising Fe and other inevitable impurities, wherein F{110} is at least 30%, F[Goss] is at least 20%, F{100} is at least 10%, F[Goss] > F{100} is satisfied, and the size of grains in the microstructure is 30-250 $\mu$m.

EP 4 640 879 A1

**Description**

Technical Field

The present disclosure relates to a non-oriented electrical steel sheet, and to a non-oriented electrical steel sheet having excellent magnetism by controlling a steel composition system and a texture, and a method for manufacturing the same.

Background Art

A non-oriented electrical steel sheet may be used as a material for an iron core, in a rotating machine such as a motor, a generator, or the like, and a stationary machine such as a small transformer or the like, and may play an important role in determining energy efficiency of electrical machines.

In motors, there may usually be many radial motors in which magnetic flux flows in a surface direction, and for such motors, since the magnetic flux may be changed when the motor rotates, a steel sheet having excellent magnetism in all directions parallel to the surface is required. In contrast, in axial motors, since magnetic flux may flow in an axial direction, magnetism in one direction may be also important. Such axial motors may have a high power density, and may be used in motors requiring a high power ratio, such as in urban air mobility vehicles, in-wheel motors for electric vehicles, or the like, which are being developed recently. It may be important for such axial motors to have better magnetism in one direction.

Oriented electrical steel sheets having excellent unidirectional characteristics may have long processes, may require batch-type high-temperature annealing, which increases process costs, and may have a large grain size of several centimeters. Conventionally, since non-oriented electrical steel sheets may be manufactured by punching to produce a complex shape such as in a motor core or the like, when the grain size becomes excessively large, workability may become very poor. In addition, oriented electrical steel sheets may have excellent magnetism in one direction, but have a ceramic film, called forsterite ($Mg_2SiO_4$), on the surface. Therefore, wear of a mold may be very large when punching a motor, which makes it difficult to process the motor, and occurrence of burrs increases during punching, so even though characteristics of the steel sheet are excellent, characteristics of the motor may deteriorate after processing. In addition, since only a Goss orientation is extremely aligned, when an angle deviates slightly in a rolling direction on the surface, it may approach a [110] orientation, which rapidly deteriorates the magnetism. Therefore, electrical steel sheets having excellent unidirectional magnetism, having a grain size, smaller than a thickness of the steel sheet, which may be produced by continuous annealing, and not having a ceramic coating layer on a surface layer are required. In addition, since an electrical steel sheet having excellent magnetic properties in one direction and excellent magnetic properties in a circumferential direction of the surface may be required, a steel sheet including a large amount of Goss orientation while also appropriately including a <100> orientation in a plane direction is required. In other words, since unidirectional characteristics are important, and partially considering magnetic flux rotation in a corner portion, formation of a texture in which the Goss orientation has a high fraction while also includes a certain amount of the <100> orientation in the plane direction, is required. In addition, grain-oriented electrical steel sheets have a long high-temperature annealing process, so batch annealing may be inevitable, and usually, after final cold-rolling, decarburization annealing may be required, followed by batch high-temperature annealing, and then planarization annealing. In other words, since a very long process is required even after cold-rolling, a ceramic coating may be formed by an annealing separator required in high-temperature annealing, and technology for removing this ceramic coating also may have disadvantages of requiring a long process line after cold-rolling. Therefore, a technology may be required that may finish in one process after the final cold-rolling by immediately applying insulating coating after annealing through a continuous line.

Magnetic properties of electrical steel sheets may representatively include iron loss and magnetic flux density. The iron loss is preferably small, the magnetic flux density is preferably high. This may be because when electricity is applied to an iron core to induce a magnetic field, as the iron loss decreases, energy may decrease by losing heat, and as the magnetic flux density increases, the magnetic field may be induced with the same energy.

To reduce iron loss, alloy elements with high resistivity such as Si, Al, and Mn may be added. This method may reduce the iron loss, but may also have a problem of reducing saturation magnetic flux density. In addition, when an Si addition amount exceeds 4%, workability may deteriorate, making cold-rolling difficult, which reduces productivity. In addition, as addition of Al, Mn, or the like increases, problems in which rolling performance decreases, hardness increases, and workability decreases may occur.

To improve the magnetic flux density and iron loss, a texture should be improved.

Patent Document 1 proposes a method of annealing a cold-rolled steel sheet to cause selective crystal growth of (100) grains on a surface thereof, so that a surface of an annealed sheet has a (100) [0vw] crystal orientation. Hereinafter, the crystal orientation is expressed by a Miller index. When the crystal orientation is expressed as {hkl}<uvw> or (hkl) [uvw], the {hkl} is a plane index of a crystal plane, parallel to a surface orientation, and the <uvw> is a crystal direction, parallel to a rolling direction. Here, h, k, l, u, v, and w are integers. In Patent Document 1, an average grain size y and a thickness x of the annealed sheet in which final-annealing has undergone is characterized in that, when S is less than 0.007 wt%, Relationship of y ≥ 2.2x + 0.1 (unit: mm) is shown, and when S is 0.007 wt% or more, Relationship of y ≥ 1.48x + 0.04 (unit: mm) is shown. That is, the grain sizes may be all larger than the thickness, so that the grains may be very large and penetrate the thickness.

In addition, Patent Document 2 discloses a (100) [0vw] non-oriented electrical steel sheet having excellent magnetic properties, including, by weight, C: more than 0 and 0.005% or less, Si: 2 to 4%, Mn: 0.05% or more and less than 1.0%, S: 0.0001 to 0.035%, Al: more than 0 and 0.20% or less, P: more than 0 and 0.2% or less, N: more than 0 and 0.003% or less, and the remainder are composed of Fe and other inevitable impurities, and characterized in that an average grain size on a surface of the sheet is the same as or larger than a thickness of the sheet. That is, Patent Document 2 also suggests that the average grain size is equal to or larger than the sheet thickness. Conventionally, since non-oriented electrical steel sheets may be manufactured by punching to produce a complex shape such as in a motor core or the like, when the grain size becomes excessively large, workability may become very poor. The method presented in Patent Document 2 uses a steel sheet having a composition that adds S as the most important element, and exhibits a ferrite structure at all manufacturing process temperatures. In addition, since selective crystal growth of (100) [0vw] grains occurs on a surface due to segregation of S and grows while encroaching on other grains to form (100) [0vw], the grain size cannot but be larger than the thickness, in order to form such a grain structure. In addition, there may be a limit to making magnetism very excellent in one direction.

Meanwhile, Patent Document 3 presents a method for forming a {100} plane, parallel to a surface of a metal sheet, on the surface of the metal sheet. The method may be a method for forming the {100} plane on the surface of the metal sheet, including a heat treatment operation of heat-treating the metal sheet at a temperature at which an austenite phase is stable while reducing oxygen in at least one area among an internal area and a surface area of the metal sheet or blocking the metal sheet from external oxygen, and an operation of phase transforming a heat-treated metal sheet into a ferrite phase. This method requires vacuum heat treatment, which may be difficult to implement industrially because it requires blocking oxygen from the outside, and may be a process that may be very difficult to succeed industrially because it requires a lot of heat treatment time. The method may be also difficult to make this very excellent in one direction.

[Prior art literature]

[Patent Document]

(Patent Document 1) Korea Patent No. 10-1203791
(Patent Document 2) Korea Patent No. 10-1227767
(Patent Document 3) Korea Patent No. 10-0797895

Summary of Invention

Technical Problem

An aspect of the present disclosure is to provide a non-oriented electrical steel sheet having excellent iron loss and magnetic flux density in one direction, that may be produced through a continuous annealing line by controlling alloy elements and process conditions of steel, such that a size of a grain is smaller than a thickness of the sheet, and a <100> orientation is formed in a direction, parallel to a Goss orientation and the surface without forming a ceramic film on the surface by controlling a texture.

Solution to Problem

According to an aspect of the present disclosure, a non-oriented electrical steel sheet includes: by weight, Si: 2.2 to 4.5%, Mn: 1.0% or less (excluding 0%), Al: 0.020 to 0.100%, Sn: 0.10 to 0.30%, As: 0.0005 to 0.0100%, Bi: 0.0005 to 0.0150%, C: 0.0050% or less (excluding 0%), S: 0.0030% or less, N: 0.0050% or less, a balance of Fe, and other inevitable impurities, and having F{110} of 30% or more, having F[Goss] of 20% or more, having F{100} of 10% or more, satisfying F[Goss] > F{100}, and having a grain size of 30 to 250 μm in a microstructure.

In this case, F{110} refers to a volume fraction of grains of which angle between a {110} plane and a surface of the steel sheet is 15° or less, F[Goss] refers to a volume fraction of grains of which angle formed with a Goss orientation is 15° or less, and F{100} refers to a volume fraction of grains of which angle between a {100} plane and the surface of the steel sheet is 15° or less.

The non-oriented electrical steel sheet may satisfy that a volume fraction of grains of which orientation deviates from a {001}<001> orientation by 15° or less is 8% or more.

The non-oriented electrical steel sheet may satisfy $B_{50}/B_s \geq 0.870$ in a rolling direction. In this case, $B_{50}$ refers to a magnitude (Tesla) of magnetic flux density induced when a magnetic field of 5000 A/m is applied, and $B_S$ is a saturation magnetic flux density value.

The non-oriented electrical steel sheet may satisfy $B_{50}/B_s \geq 0.855$ as an average value in a rolling direction and a rolling vertical direction.

The non-oriented electrical steel sheet may satisfy a core loss of 1.76 W/kg or less in a rolling direction when a magnetic flux density of 1.5 Tesla is induced at a frequency of 50 Hz.

The non-oriented electrical steel sheet may further include Cu: 0.015% or less.

In addition, according to another aspect of the present disclosure, a method for manufacturing a non-oriented electrical steel sheet, includes:

providing a slab including composition components described above; reheating and then rolling the slab in a range of 1050 to 1180°C to prepare a hot-rolled steel sheet; cold-rolling and then annealing the hot-rolled steel sheet, or annealing the hot-rolled steel sheet without cold-rolling; cold-rolling the annealed hot-rolled steel sheet to prepare a cold-rolled steel sheet; and final-annealing the cold-rolled steel sheet,

wherein a reduction ratio during the cold-rolling of the annealed steel sheet is controlled to have a range of 50 to 85%, during the final-annealing, a heating rate in a region including 300 to 850°C is controlled to have a range of 30°C/s or more, and annealing is continuously performed instead of batchwise in a coil state.

During the final-annealing, a temperature may be 900 to 1,150°C.

During the final-annealing, an annealing time may be 30 to 600 seconds.

The hot-rolled steel sheet annealing may be performed in a range of 900 to 1,150°C.

During the final-annealing, an atmosphere may include hydrogen, and a degree of oxidation may satisfy $P_{H2}/P_{H2O}$ = 0.015.

The steel sheet in which the final-annealing has completed may have F{110} of 30% or more, may have F[Goss] of 20% or more, may have F{100} of 10% or more, may satisfy F[Goss] > F{100}, and may have a grain size of 30 to 250 $\mu$m in a microstructure. In this case, F{110} refers to a volume fraction of grains of which angle between a {110} plane and a surface of the steel sheet is 15° or less, F[Goss] refers to a volume fraction of grains of which angle formed with a Goss orientation is 15° or less, and F{100} refers to a volume fraction of grains of which angle between a {100} plane and the surface of the steel sheet is 15° or less.

Advantageous Effects of Invention

A non-oriented electrical steel sheet according to the present disclosure may improve a texture by appropriately controlling amounts of Si, Mn, and Al, and amounts of Sn and As, among alloy elements to be added to steel, and optimally managing a cold-rolling reduction ratio and final-annealing conditions, thereby growing a {001} orientation together with a Goss orientation.

In addition, by preventing nitriding due to segregation of Sn and As, it is possible to resolve deterioration of magnetism due to an Al amount or nitrogen atmosphere despite partially including Al.

Also, since it may not be a technology for oriented electrical steel sheets, there may be no need to form an $Mg_2SiO_4$ film on a surface of the steel sheet using an annealing separator.

Therefore, a non-oriented electrical steel sheet according to the present disclosure may provide a non-oriented electrical steel sheet having excellent iron loss ($W_{15/50}$) of 1.76 W/Kg or less in a rolling direction, while having remarkably improved magnetism.

Best Mode for Invention

Advantages and features of the present disclosure, and a method for achieving the same, will become clear with reference to embodiments described in detail below.

In electrical steel sheets, iron loss may generally be divided into hysteresis loss, eddy current loss, and abnormal eddy current loss, and there may be differences by grade in iron loss measured at 50 Hz at 1.5 T, but a ratio of hysteresis loss may be very high in highest grade materials.

In materials having excellent magnetic properties of 0.35 mm thickness in electrical steel sheets, hysteresis loss may be about 70 to 75% when iron loss is separated in a material in which iron loss is about 2.1 W/kg, and a crystal orientation, precipitates, and impurities have a very large impact on the hysteresis loss. It can be seen that control of a texture and control of precipitates are very important to improve iron loss.

In axial motors, since iron loss and magnetic flux density in one direction may be important, when a fraction of a Goss orientation having excellent iron loss in one direction, as compared to existing non-oriented electrical steel sheets, may increase, iron loss and magnetic flux density in a rolling direction in particular may be improved. However, when a Goss orientation ({110}<001>) is formed the most, and a direction, perpendicular to a surface, is a <100> orientation, that is, when a plane direction includes many {100} planes, and among these, when a Cube orientation ({100}<001>) with excellent magnetism is formed in an RD direction, magnetism in the rolling direction may be excellent, and also the magnetism may be prevented from being greatly deteriorated in a direction, perpendicular to rolling.

Therefore, to form the Goss orientation and the Cube orientation simultaneously, the present disclosure may appropriately utilize segregation elements Sn and As to control a crystal orientation and appropriately control a final cold reduction ratio. In addition, the segregation element Sn has been known as an element for controlling the texture in the past, but in the present disclosure, an effect thereof was maximized by adding As together, and a method for forming the Goss and Cube orientations together was derived through various experiments. That is, in the present disclosure, to improve characteristics of one direction, formation of a {100}<0uv> orientation, other than the Goss or {100}<001> orientation, was reduced, and the {100}<001> orientation was formed to increase formation of an RD/<001> orientation.

A non-oriented electrical steel sheet of the present disclosure relates to a non-oriented electrical steel sheet including, by weight, Si: 2.2 to 4.5%, Mn: 1.0% or less (excluding 0%), Al: 0.020 to 0.100%, Sn: 0.10 to 0.30%, As: 0.0005 to 0.0100%, Bi: 0.0005 to 0.0150%, C: 0.0050% or less (excluding 0%), S: 0.0030% or less, N: 0.0050% or less, a balance of Fe, and other inevitable impurities, and having F{110} of 30% or more, having F[Goss] of 20% or more, having F{100} of 10% or more, satisfying F[Goss] > F{100}, and having a grain size of 30 to 250 $\mu$m in a microstructure. In this case, F{110} refers to a volume fraction of grains of which angle between a {110} plane and a surface of the steel sheet is 15° or less, F[Goss] refers to a volume fraction of grains of which angle formed with a Goss orientation is 15° or less, and F{100} refers to a volume fraction of grains of which angle between a {100} plane and the surface of the steel sheet is 15° or less.

Hereinafter, composition and content restrictions of a non-oriented electrical steel sheet of the present disclosure will be described, and "%" herein means wt%.

Sn: 0.10 to 0.30%

Sn may be a grain boundary segregation element, may suppress diffusion of nitrogen through grain boundaries, may suppress formation of {111} and {112} textures that may be detrimental to magnetism, may increase {100} and {110} textures that may be advantageous to magnetism, thereby improving magnetic properties, and may require an addition of 0.10% or more. However, when an addition amount exceeds 0.30%, grain growth may be suppressed to lower magnetism, and may not only deteriorate rollability but also deteriorate adhesion. Therefore, in the present disclosure, an Sn addition amount may be controlled in a range of 0.10 to 0.30%.

As: 0.0005 to 0.0100%

As may act as an auxiliary element enhancing an effect of Sn. There may be an effect of controlling a {111} texture as a segregation element, and may be a component that may maximize an effect of adding Sn by adding it simultaneously with Sn, requiring an addition amount of 0.0005% or more. However, since film adhesion deteriorates when added excessively, an As addition amount in the present disclosure may be controlled in a range of 0.0005 to 0.0100%.

Bi: 0.0005 to 0.0150%

Bi may also have an effect of segregating at grain boundaries and increasing a Goss orientation, but when an amount is too small, the effect may be small, and when it is too large, it may deteriorate rolling properties and film adhesion. Therefore, in the present disclosure, a Bi amount may be controlled in a range of 0.0005-0.0150%.

In the present disclosure, when Sn, As, and Bi may be added simultaneously, it may be advantageous to simultaneously form the Goss orientation and the Cube orientation, where a rolling direction may be parallel to a <001> orientation, and a grain size may not be excessively grown by simultaneous formation of the Goss and Cube orientations, which may be advantageous for motor processability.

Si: 2.2 to 4.5%

Si may be an element increasing resistivity and reducing eddy current loss among iron loss, but when it is excessive, a fracture of a sheet may occur, in the present disclosure, Si may be added in a range of 4.5% or less.

In addition, since the present disclosure may be based on a composition in which solid phase transformation does not exist in an entire temperature range, Si may be added in a range of 2.2% or more.

Mn: 1.0% or less (excluding 0%)

As an amount of Mn to be added increases, saturation flux density may decrease, and in addition, since Mn may be an austenite-forming element in the present disclosure, it may not be added to satisfy a range not causing solid phase transformation. However, when an Si amount increases, even when an amount of manganese increases, the amount of Mn not forming austenite may increase. In addition, since a texture deteriorates somewhat when Mn is added excessively, it may not be added too much. Since Mn may have an effect of increasing resistivity and may improve iron loss, it may be added some, so 0% may be excluded, and an Mn addition amount may be controlled in a range of 1.0% or less, in a range not forming austenite.

Al: 0.020 to 0.100%

Al may be an element increasing resistivity and reducing eddy current loss, but a texture may be changed as an Al amount increases. In addition, an Al oxide may be distributed on a surface, and an Al nitride may have a negative effect on magnetism and may also make coating adhesion inferior in the future. Therefore, to maximize an effect of improving the texture by Sn and Sb, the Al amount may be set to be 0.100% or less. When Al is contained in too little an amount, it may react with the extremely small amount of N contained in steel and may form very fine AlN, which deteriorates magnetism, so it may be added in a range of 0.020% or more.

C: 0.0050% or less

C may combine with Ti, Nb, or the like to form carbides, thereby inferior to magnetism, and when processed into an electrical product in a final product and used, iron loss may increase due to magnetic aging, which reduces efficiency of an electrical device, so it may be controlled to 0.0050% or less.

In addition, the non-oriented electrical steel sheet of the present disclosure may include Cu, S, and N, and Cu: 0.015% or less, S: 0.0030% or less, and N: 0.0050% or less may be added.

N may not be added because it forms fine and long AlN precipitates and suppresses grain growth, but considering an amount thereof to be inevitably added during a steelmaking process, it may be added to 0.0050% or less, more preferably 0.0020% or less.

S may not be added because it forms fine precipitates, MnS and CuS, and suppresses grain growth, thereby worsening magnetic properties. However, considering an amount thereof to be inevitably added during a steelmaking process, it may be added to 0.0030% or less, more preferably 0.0010% or less.

Cu may react with impurity elements to be added during a steelmaking process to form fine sulfides, carbides, and nitrides, which have a detrimental effect on magnetism, so it may be controlled to 0.015% or less.

Other residual components may be Fe and inevitable impurities. The electrical steel sheet of the present disclosure may not exclude the addition of other component elements. The above-mentioned inevitable impurities may be unintentionally mixed in from raw materials or the surrounding environment during a conventional steel manufacturing process, and may not be excluded. The above-mentioned inevitable impurities can be understood by a technician in a conventional steel manufacturing field.

In addition, a non-oriented electrical steel sheet of the present disclosure may have F{110} of 30% or more, may have F[Goss] of 20% or more, may have F{100} of 10% or more, may satisfy F[Goss] > F{100}, and may have a grain size of 30 to 250 $\mu$m in a microstructure. In this case, F{110} refers to a volume fraction of grains of which angle between a {110} plane and a surface of the steel sheet is 15° or less, F[Goss] refers to a volume fraction of grains of which angle formed with a Goss orientation is 15° or less, and F{100} refers to a volume fraction of grains of which angle between a {100} plane and the surface of the steel sheet is 15° or less.

Conventionally, when an RD direction is used as a standard, the best direction for magnetism may be a <100> orientation, and a second better direction may be a <110> orientation, and finally a <111> orientation may be the worst.

Conventionally, when an Si amount increases, a decrease in saturation flux value due to Si may be expressed as the following Relationship 1.

[Relationship 1]

$$Bs[T]=2.1561-0.0413\times[Si\%]-0.0198\times[Mn\%]-0.0604\times[Al\%]$$

In this case, each element amount is in wt%.

In addition, since a {111}<112> orientation may be very strongly developed, magnetic flux density becomes much worse than a decreased saturation flux density.

Non-oriented electrical steel sheets have ideal magnetic values when <100> is evenly disposed in a surface direction of the steel sheet, but when a <112> orientation is strongly developed in a plane direction, magnetism may be very poor. In addition, considering a volume fraction of grains of which {112} plane forms an angle of 15° or less with the rolling plane, in non-oriented electrical steel sheets having a high Si amount and no phase transformation, there may be more of them, as compared to a {111} orientation.

Rather than uniformly excellent magnetism in the surface direction required in the conventional non-oriented electrical steel sheets as above, the present disclosure pursue making magnetism more excellent in one direction to be advantageous for use in axial motors, and for this purpose, a Goss orientation and a Cube direction should be formed simultaneously.

Therefore, in the present disclosure, Sn, As, and Bi may be added to a composition system and a cold-rolling reduction ratio and final-annealing conditions may be optimally managed to improve a texture such that F{110} satisfies 30% or more, F[Goss] satisfies 20% or more, and F{100} satisfies 10% or more.

In addition, a non-oriented electrical steel sheet of the present disclosure may satisfy that a volume fraction of grains of which orientation deviates from a {001}<001> orientation by 15° or less is 8% or more.

In addition, the non-oriented electrical steel sheet may satisfy a core loss of 1.76 W/kg or less in a rolling direction when a magnetic flux density of 1.5 Tesla is induced at a frequency of 50 Hz.

In addition, the non-oriented electrical steel sheet may satisfy an average grain size of 30 to 150 $\mu$m in the microstructure.

In a conventional non-oriented electrical steel sheet including about 3.2% of Si and 30 ppm or less of C and S, F {110} may be about 7%, F[Goss] may be about 1.5%, and F{100} may be about 16%, of which F[Cube] may be only about 2.7%. In contrast, a non-oriented electrical steel sheet of the present disclosure including 0.1% or more of Sn, As, and Bi may form F{110} of 41%, F[Goss] of 23%, and, in some cases, may even form up to 37%, and F[Cube] may also form about 8% or more. Therefore, remarkable improvement in rolling direction magnetic flux density may be achieved, and depending on conditions, even a steel sheet including 3% or more of Si may secure many values of 1.80 W/kg or more.

In addition, an electrical steel sheet of the present disclosure may satisfy $B_{50}/B_s \geq 0.870$ in a rolling direction by controlling a steel composition system and controlling atmosphere during final-annealing. In this case, $B_{50}$ refers to a magnitude (Tesla) of magnetic flux density induced when a magnetic field of 5000 A/m is applied, and $B_S$ is a saturation magnetic flux density value.

In addition, a non-oriented electrical steel sheet of the present disclosure may satisfy $B_{50}/B_s \geq 0.855$ as an average value in a rolling direction and a rolling vertical direction.

A degree of formation of a texture advantageous to magnetism due to process improvement may be evaluated by dividing magnetic flux density by a saturation magnetic flux density value according to an Si amount. In other words, even though a high magnetic flux density is obtained in a state in which a silicon amount is low, since iron loss has very poor characteristics, a degree of formation of a texture having excellent magnetism with low iron loss and high magnetic flux density should be evaluated by a $B_{50}/B_s$ value.

In addition, an electrical steel sheet of the present disclosure may be strongly developed especially in a {100} <001> orientation in a {100} orientation along with Goss, in this case, characteristics in a R direction may be greatly improved.

Next, a method for manufacturing a non-oriented electrical steel sheet according to an embodiment of the present disclosure will be described in detail.

A method for manufacturing a non-oriented electrical steel sheet of the present disclosure may include providing a slab including composition components described above; reheating and then rolling the slab in a range of 1050 to 1180°C to prepare a hot-rolled steel sheet; cold-rolling and then annealing the hot-rolled steel sheet, or annealing the hot-rolled steel sheet without cold-rolling; cold-rolling the annealed hot-rolled steel sheet to prepare a cold-rolled steel sheet; and final-annealing the cold-rolled steel sheet, wherein a reduction ratio during the cold-rolling of the annealed steel sheet is controlled to have a range of 50 to 85%, and during the final-annealing, a heating rate in a region including 300 to 850°C is controlled to have a range of 30°C/s or more, and annealing is continuously performed instead of batchwise in a coil state.

First, the present disclosure may provide a slab having a composition component including the composition components as above. The slab having such a composition component range may not form an austenite phase in a temperature range in a solid state.

And, the slab may be reheated to 1050 to 1180°C and then rolled to manufacture a hot-rolled steel sheet. As above, W15/50 (iron loss measured at 1.5T 50Hz) may have large hysteresis loss, and may be greatly influenced by fine precipitates along with a texture. Therefore, in the present disclosure, it may be necessary to control a slab reheating temperature to be described later together with the component system that may reduce the formation of fine precipitates in the component system. When the reheating temperature exceeds 1180°C, there may be a problem in that the precipitates are re-dissolved in the slab and then finely precipitated, and when the reheating temperature is lower than 1050°C, hot-rolling may be difficult.

The slab reheated in this manner may be hot-rolled to manufacture a hot-rolled steel sheet.

Subsequently, in the present disclosure, the hot-rolled steel sheet may be cold-rolled and then annealed or annealed without cold-rolling. That is, the hot-rolled sheet may be annealed, and since a final cold reduction ratio may be important in the present disclosure, the cold-rolling may be partially performed before annealing the hot-rolled sheet to match the final cold reduction ratio after annealing. Depending on a hot-rolled thickness, the hot-rolled sheet may be cold-rolled, or when the hot-rolled thickness satisfies the final cold-rolled ratio, the hot-rolled sheet may be annealed directly without cold-rolling.

The hot-rolled sheet may be annealed at 900 to 1150°C under the hot-rolled sheet annealing conditions. In the present disclosure, since the Sn amount may be high and grain growth may be suppressed, when the temperature is lower than 900°C during hot-rolled sheet annealing, Sn may be excessively contained in the steel, which reduces grain growth, and when it exceeds 1150°C, surface defects may occur. Therefore, a hot-rolled sheet annealing temperature may be controlled in this manner.

Moreover, the hot-rolled steel sheet that has undergone the hot-rolled sheet annealing may be pickled.

Further, in the present disclosure, the annealed hot-rolled sheet may be cold-rolled, and in this case, may have a cold reduction ratio of 50 to 85%. When the cold reduction ratio is too low, productivity may be very poor during intermediate annealing and a Goss orientation may not be developed, and when it is too high, development of a {111}<112> orientation becomes strong, so it may be 50 to 85%.

More preferably, it is 55 to 83%, and in this case, it may be advantageous to form the Goss orientation and the Cube orientation at the same time.

Subsequently, in the present disclosure, the cold-rolled steel sheet manufactured by the cold-rolling may be final-annealed, and a heating rate in a region including 300 to 850°C during the final-annealing may be controlled to 30°C/s or more, and the annealing may be performed continuously, rather than batchwise, in a coil state.

The heating rate in the region including 300 to 850°C during the final-annealing may be 30°C/s or more, and an annealing soaking temperature may be 950 to 1150°C, more preferably 970 to 1050°C.

In the present disclosure, to suppress formation of {111} and {112} orientations in a component system and to grow a Goss orientation and a Cube orientation, appropriate amounts of Sn, Bi, and As and appropriate cold reduction ratio and heating rate may be very important. This may be because increasing the heating rate suppresses growth of {111} or {112} orientations, such that growth of {100} orientation becomes advantageous. In addition, a rate of increase in the range including 300 to 850°C, which may be a temperature at which recovery and recrystallization occur, may be particularly more important, and when a rate of increase may be 30°C/s or higher, growth of the {100} orientation may occur.

In an embodiment of the present disclosure, since an Sn amount may be high and grain growth may be suppressed, final-annealing may be performed at a temperature of 900°C or higher during the final-annealing, and more preferably, may be performed at 950°C or higher. In addition, in the present disclosure, the annealing may be performed continuously, not batchwise, in a coil state.

In addition, to prevent abnormal grain growth, final-annealing may be performed at 1150°C or lower, and more preferably, may be performed at 1050°C or lower.

In addition, a final-annealing time may be 30 to 600 seconds, but when it is less than 30 seconds, since an S amount may be high in the present disclosure, grain boundary segregation may prevent grain growth, and the grain size becomes small, and when it exceeds 600 seconds, continuous annealing may become difficult. Also, since the annealing time may be shortened to improve economy, the annealing time may be 30 to 600 seconds from a viewpoint of improving economy.

Atmosphere during the final-annealing may include hydrogen, and a degree of oxidation may be $P_{H2}/P_{H2O} \leq$ 0.015. In this case, $P_{H2}$ means a partial pressure of hydrogen, and $P_{H2O}$ means a partial pressure of water vapor.

Also, although it is not limited to the partial pressure of hydrogen in a mixed gas during the final-annealing, it is more preferably 51 vol% or more.

Since hydrogen may be included during the final-annealing, most Fe-based oxides on a surface may be reduced, and some Al may be oxidized or nitrided. And, depending on a degree of oxidation, an internal oxide layer may be formed, or Al-based oxides may be formed on a surface. In addition, Al nitrides may exist on a surface, which deteriorates iron loss and adhesion.

To prevent this, an Al amount may be lowered in the present disclosure, and a degree of oxidation of the atmosphere may be managed during the final-annealing to $P_{H2}/P_{H2O} \leq 0.015$. When the degree of oxidation, a $P_{H2}/P_{H2O}$ value, exceeds 0.015, excessive Sn segregates below a surface oxidation layer, resulting in poor adhesion.

In addition, to improve adhesion or surface, the degree of oxidation is more preferably controlled to have $P_{H2}/P_{H2O} \leq 0.008$.

Mode for Invention

Hereinafter, a method for manufacturing a non-oriented electrical steel sheet according to the present disclosure will be described in detail through examples. However, the following examples are merely illustrative of the present disclosure, and contents of the present disclosure are not limited by the following examples.

(Example 1)

A slab including, by weight, C: 0.0025%, Mn: 0.1%, Al: 0.035%, Si, Sn, As, and Bi, as shown in Table 1 below, a balance of Fe, and other inevitable impurities, was prepared. The slab was reheated to 1150°C and then hot-rolled to a thickness of 1.8 mm to manufacture a hot-rolled steel sheet. Thereafter, after finish-rolling to a thickness of 0.8 mm, the finish hot-rolled steel sheet was hot-rolled sheet annealed at 1050°C for 50 seconds, and then cooled slowly to 750°C and air-cooled. Then, the air-cooled steel sheet was pickled and then cold-rolled to a thickness of 0.27 mm. Subsequently, the cold-rolled steel sheet was subjected to final-annealing at 1020°C for 300 seconds in an atmosphere of 95% hydrogen, 5% nitrogen, and a dew point of -25°C (in this case, a degree of oxidation, a $P_{H2}/P_{H2O}$ value, was 0.00076), to manufacture an electrical steel sheet. In this case, a heating rate up to 850°C is as shown in Table 1 below.

Magnetism of the electrical steel sheet manufactured in this manner was measured, and after measuring in a rolling direction and a direction, perpendicular to the rolling, it was expressed as a rolling direction measurement value and an average value of two values, and results are shown in Table 2 below. In addition, an orientation fraction was calculated through EBSD measurement for a texture, and results are also shown in Table 2 below. In Table 2 below, iron loss $W_{15}/_{50}$ is an average iron loss in a rolling direction and a vertical direction when a magnetic flux density of 1.5 Tesla is induced at a frequency of 50 Hz, and a unit thereof was W/kg.

[Table 1]

| Steel No. | Slab Composition (wt%) | | | | Final Anneal Heating Rate (°C/s) |
|---|---|---|---|---|---|
| | Si | Sn | As | Bi | |
| 1 | 3.4 | - | 0.0042 | 0.0025 | 32 |
| 2 | 3.4 | 0.014 | 0.0045 | 0.0025 | 32 |
| 3 | 3.4 | 0.15 | 0.0035 | 0.0025 | 32 |
| 4 | 3.4 | 0.25 | 0.0041 | 0.0025 | 32 |
| 5 | 3.4 | 0.32 | 0.0043 | 0.0025 | 32 |
| 6 | 1.7 | 0.16 | 0.0041 | 0.0025 | 32 |
| 7 | 2.8 | 0.16 | 0.0045 | 0.0025 | 32 |
| 8 | 3.3 | 0.16 | 0.0043 | 0.0025 | 32 |
| 9 | 4.6 | 0.16 | 0.0042 | 0.0025 | - |

[Table 2]

| Steel No. | A* | B* | C* | D* | E* | F* | G* | H* | I* | J* | Adhesion | Example |
|---|---|---|---|---|---|---|---|---|---|---|---|---|
| 1 | 1.71 | 2.15 | 1. 68 | 0.850 | 0.835 | 21 | 14 | 8 | 26 | 6 | Good | Comparative 1 |
| 2 | 1.74 | 2.04 | 1.7 | 0.865 | 0.845 | 25 | 15 | 9 | 21 | 7 | Good | Comparative 2 |
| 3 | 1. 82 | 1. 68 | 1.74 | 0.905 | 0.865 | 41 | 26 | 13 | 15 | 11 | Good | Inventive 1 |
| 4 | 1.83 | 1.65 | 1.74 | 0.910 | 0.865 | 45 | 30 | 12 | 13 | 10 | Good | Inventive 2 |
| 5 | 1.85 | 1.72 | 1.75 | 0.920 | 0.870 | 48 | 35 | 9 | 10 | 8 | Poor | Comparative 3 |
| 6 | 1.78 | 2.96 | 1.74 | 0.855 | 0.836 | 23 | 15 | 16 | 27 | 4.4 | Good | Comparative 4 |
| 7 | 1.83 | 1.75 | 1.74 | 0.899 | 0.854 | 35 | 21 | 17 | 19 | 8.5 | Good | Inventive 3 |
| 8 | 1.82 | 1.66 | 1.73 | 0.903 | 0.858 | 40 | 25 | 13 | 14 | 11 | Good | Inventive 4 |

(continued)

| Steel No. | A* | B* | C* | D* | E* | F* | G* | H* | I* | J* | Adhesion | Example |
|---|---|---|---|---|---|---|---|---|---|---|---|---|
| 9 | - | - | - | - | - | - | - | - | - | - | - | Comparative 5(Subsequent Process not performed due to Fracture) |

*In Table 2, A* represents a rolling direction magnetic flux density $B_{50}$, B* represents a rolling direction iron loss $W_{15/50}$, C* represents an average magnetic flux density $B_{50}$ in rolling and rolling vertical directions, D* represents a rolling direction $B_{50}/Bs$, E* represents a rolling direction and rolling vertical direction average magnetic flux density $B_{50}/Bs$, F* represents F{110}, G* represents F[Goss] (%), H* represents F{100}(%), I* represents F{111}(%), and J* represents a {100}<001> fraction.

As shown in Tables 1 and 2 above, when Sn was controlled in an appropriate amount at a Si amount of 2.2% or more without solid-phase transformation, {111} decreased and a Goss orientation increased very significantly. In addition, a {100} orientation increased, and in particular, it can be seen that a {100}<001> value among the {100} orientation is high, and from this, it can be confirmed that a magnetic flux density and iron loss in the rolling direction is improved.

(Example 2)

A slab including, by weight, C: 0.0021%, Mn: 0.12%, Al: 0.032%, Si, Sn, As, and Bi, as shown in Table 3 below, a balance of Fe, and other inevitable impurities was prepared. The slab was reheated to 1150°C and then was hot-rolled to a thickness of 1.8 mm to manufacture a hot-rolled steel sheet. Thereafter, after finish-rolling to a thickness of 1.0 mm, the finish hot-rolled steel sheet was hot-rolled sheet annealed at 1050°C for 50 seconds, and then cooled slowly to 750°C and air-cooled. Then, the air-cooled steel sheet was pickled and then cold-rolled to a thickness of 0.30 mm. Subsequently, the cold-rolled steel sheet was subjected to final-annealing at 980°C for 300 seconds in an atmosphere of 95% hydrogen, 5% nitrogen, and a dew point of -25°C (in this case, a degree of oxidation, a $P_{H2}/P_{H2O}$ value, was 0.00076), to manufacture an electrical steel sheet. In this case, a heating rate up to 850°C is as shown in Table 3 below.
Magnetism of the electrical steel sheet manufactured in this manner was measured, and after measuring in a rolling direction and a direction, perpendicular to the rolling, it was expressed as a rolling direction measurement value and an average value of two values, and results are shown in Table 4 below. In addition, an orientation fraction was calculated through EBSD measurement for a texture, and results are also shown in Table 4 below. In Table 4 below, iron loss $W_{15/50}$ is an average iron loss in a rolling direction and a vertical direction when a magnetic flux density of 1.5 Tesla is induced at a frequency of 50 Hz, and a unit thereof was W/kg.

[Table 3]

| Steel No. | Slab Composition (wt%) | | | | Final Anneal Heating Rate (°C/s) |
|---|---|---|---|---|---|
| | Si | Sn | As | Bi | |
| 10 | 3.2 | 0.14 | 0.0002 | 0.0025 | 32 |
| 11 | 3.2 | 0.14 | 0.0025 | 0.0025 | 32 |
| 12 | 3.2 | 0.14 | 0.0041 | 0.0025 | 32 |
| 13 | 3.2 | 0.14 | 0.025 | 0.0025 | 32 |
| 14 | 3.3 | 0.14 | 0.0042 | - | 32 |
| 15 | 3.3 | 0.14 | 0.0045 | 0.004 | 32 |
| 16 | 3.3 | 0.14 | 0.0041 | 0.02 | 32 |

[Table 4]

| Steel No. | A* | B* | C* | D* | E* | F* | G* | H* | I* | J* | Adhesion | Example |
|---|---|---|---|---|---|---|---|---|---|---|---|---|
| 10 | 1.73 | 2.16 | 1.71 | 0.857 | 0.847 | 28 | 16 | 13 | 17 | 3.8 | Good | Comparative 6 |
| 11 | 1.76 | 1.74 | 1.73 | 0.871 | 0.857 | 31 | 21 | 11 | 15 | 8.5 | Good | Inventive 5 |

(continued)

| Steel No. | A* | B* | C* | D* | E* | F* | G* | H* | I* | J* | Adhesion | Example |
|---|---|---|---|---|---|---|---|---|---|---|---|---|
| 12 | 1.76 | 1.75 | 1.73 | 0.871 | 0.857 | 33 | 22 | 11 | 15 | 9 | Good | Inventive 6 |
| 13 | 1.74 | 2.05 | 1.71 | 0.861 | 0.847 | 29 | 19 | 10 | 18 | 7 | Poor | Comparative 7 |
| 14 | 1.67 | 2.15 | 1 | 0.828 | 0.496 | 27 | 16 | 10 | 19 | 6 | Good | Comparative 8 |
| 15 | 1.77 | 1.74 | 1.72 | 0.878 | 0.853 | 34 | 21 | 11 | 17 | 8.5 | Good | Inventive 7 |
| 16 | 1.73 | 1. 99 | 1.73 | 0.858 | 0.858 | 35 | 25 | 9 | 16 | 26 | Poor | Comparative 9 |

*In Table 4, A* represents a rolling direction magnetic flux density $B_{50}$, B* represents a rolling direction iron loss $W_{15}/_{50}$, C* represents an average magnetic flux density $B_{50}$ in rolling and rolling vertical directions, D* represents a rolling direction $B_{50}/Bs$, E* represents a rolling direction and rolling vertical direction average magnetic flux density $B_{50}/Bs$, F* represents F{110}, G* represents F[Goss] (%), H* represents F{100}(%), I* represents F{111}(%), and J* represents a {100}<001> fraction.

As shown in Tables 3 and 4 above, when As and Bi were added, a Goss orientation increased, which improved a magnetic flux density and iron loss in a rolling direction. However, it can be confirmed excessive addition of these elements results in poor adhesion, which are not desirable.

(Example 3)

A slab including, by weight, C: 0.0029%, Si: 3.3%, Mn: 0.1%, Sn 0.16%, As 0.0043%, Bi 0.0032%, a balance of Fe, and other inevitable impurities, and Al and Cu controlled as shown in Table 5 below, was prepared. The slab was reheated to 1150°C and then was hot-rolled to a thickness of 1.8 mm to manufacture a hot-rolled steel sheet. Thereafter, after finish-rolling to a thickness of 0.8 mm, the finish hot-rolled steel sheet was hot-rolled sheet annealed at 1050°C for 50 seconds, and then cooled slowly to 750°C and air-cooled. Then, the air-cooled steel sheet was pickled and then cold-rolled to a thickness of 0.30 mm. Subsequently, the cold-rolled steel sheet was annealed at 1040°C for 300 seconds in an atmosphere of 95% hydrogen, 5% nitrogen, and a dew point of -25°C (in this case, a degree of oxidation, a $P_{H2}/P_{H2O}$ value, was 0.00076), to manufacture an electrical steel sheet. In this case, a heating rate up to 850°C is as shown in Table 5 below.
Magnetism of the electrical steel sheet manufactured in this manner was measured, and after measuring in a rolling direction and a direction, perpendicular to the rolling, it was expressed as a rolling direction measurement value and an average value of two values, and results are shown in Table 6 below. In addition, an orientation fraction was calculated through EBSD measurement for a texture, and results are also shown in Table 6 below. in Table 6 below, iron loss $W_{15}/_{50}$ is an average iron loss in a rolling direction and a vertical direction when a magnetic flux density of 1.5 Tesla is induced at a frequency of 50 Hz, and a unit thereof was W/kg.

[Table 5]

| Steel No. | Slab Composition (wt%) | | | Final Anneal Heating Rate (°C/s) |
|---|---|---|---|---|
| | Si | Al | Cu | |
| 17 | 3.3 | 0.008 | 0.01 | 32 |
| 18 | 3.3 | 0.03 | 0.01 | 32 |
| 19 | 3.3 | 2.3 | - | 32 |
| 20 | 3.3 | 0.035 | 0.005 | 32 |
| 21 | 3.3 | 0.035 | 0.01 | 32 |
| 22 | 3.3 | 0.035 | 0.4 | 32 |

[Table 6]

| Steel No. | A* | B* | C* | D* | E* | F* | G* | H* | I* | J* | Adhesion | Example |
|---|---|---|---|---|---|---|---|---|---|---|---|---|
| 17 | 1.8 | 1.95 | 1.73 | 0.892 | 0.858 | 38 | 23 | 12 | 14 | 10 | Good | Comparative 10 |
| 18 | 1.81 | 1.68 | 1.74 | 0.898 | 0.863 | 39 | 24 | 12 | 13 | 11 | Good | Inventive 8 |

(continued)

| Steel No. | A* | B* | C* | D* | E* | F* | G* | H* | I* | J* | Adhesion | Example |
|---|---|---|---|---|---|---|---|---|---|---|---|---|
| 19 | - | - | - | - | - | - | - | - | - | - | Good | Comparative 11(Subsequent Process not performed due to Roll Fracture) |
| 20 | 1.8 | 1.75 | 1.73 | 0.893 | 0.858 | 34 | 21 | 12 | 18 | 9 | Good | Inventive 9 |
| 21 | 1.81 | 1.69 | 1.74 | 0.898 | 0.863 | 38 | 23 | 12 | 14 | 11 | Good | Inventive 10 |
| 22 | 1.74 | 1.84 | 1.7 | 0.863 | 0.843 | 27 | 25 | 16 | 21 | 5 | Good | Comparative 12 |

*In Table 6, A* represents a rolling direction magnetic flux density $B_{50}$, B* represents a rolling direction iron loss $W_{15}/_{50}$, C* represents an average magnetic flux density $B_{50}$ in rolling and rolling vertical directions, D* represents a rolling direction $B_{50}/Bs$, E* represents a rolling direction and rolling vertical direction average magnetic flux density $B_{50}/Bs$, F* represents F{110}, G* represents F[Goss] (%), H* represents F{100}(%), I* represents F{111}(%), and J* represents a {100}<001> fraction.

As shown in Tables 5 and 6 above, in a component system without solid-state transformation, when Al and Cu amounts are changed, iron loss magnetic flux density changed according to the Al amount, and when Al was too low, AlN was finely precipitated, which worsens iron loss, and when Al was too high, rolling properties was poor.

In addition, it can be confirmed that Cu is desired not to be added excessively due to iron loss deterioration caused by CuS formation when Cu was added excessively.

(Example 4)

A slab including, by weight, C: 0.0029%, Si: 3.3%, Mn: 0.1%, Al 0.03%, Sn 0.16%, As 0.0043%, Bi 0.0032%, Cu: 0.01%, and in which C, N, and S amounts were controlled as shown in Table 7 below, was prepared. The slab was reheated to 1150°C and then was hot-rolled to a thickness of 1.8 mm to manufacture a hot-rolled steel sheet. Thereafter, after finish-rolling to a thickness of 0.8 mm, the finish hot-rolled steel sheet was hot-rolled sheet annealed at 1050°C for 50 seconds, and then cooled slowly to 750°C and air-cooled. Then, the air-cooled steel sheet was pickled and then cold-rolled to a thickness of 0.30 mm. Subsequently, the cold-rolled steel sheet was subjected to final-annealing at 980°C for 300 seconds in an atmosphere of 95% hydrogen, 5% nitrogen, and a dew point of -25°C (in this case, a degree of oxidation, a $P_{H2}/P_{H2O}$ value, was 0.00076), to manufacture an electrical steel sheet. In this case, a heating rate up to 850°C is as shown in Table 7 below.

Magnetism of the electrical steel sheet manufactured in this manner was measured, and after measuring in a rolling direction and a direction, perpendicular to the rolling, it was expressed as a rolling direction measurement value and an average value of two values, and results are shown in Table 7 below. And, a grain size uses an average grain size calculated by obtaining an area of the grain. Measurement was performed in the following order: measuring the number of grains (boundary was calculated as 0.5) → calculating an average area of grains → calculating the grain size (d = √(average grain area)). In Table 7 below, iron loss $W_{15}/_{50}$ is an average iron loss in a rolling direction and a vertical direction when a magnetic flux density of 1.5 Tesla is induced at a frequency of 50 Hz, and a unit thereof was W/kg.

[Table 7]

| Steel No. | Slab Component (wt%) | | | Final Anneal Heating Rate (°C/s) | A* | B* | C* | D* | E* | Grain Size (μm) | Example |
|---|---|---|---|---|---|---|---|---|---|---|---|
| | C | N | S | | | | | | | | |
| 23 | 0.002 | 0.0015 | 0.0015 | 32 | 1.78 | 1.73 | 1.73 | 0.883 | 0.858 | 110 | Inventive 11 |
| 24 | 0.002 | 0.009 | 0.002 | 32 | 1.71 | 2.42 | 1.66 | 0.848 | 0.824 | 28 | Comparative 13 |
| 25 | 0.002 | 0.002 | 0.01 | 32 | 1.72 | 2.64 | 1.65 | 0.853 | 0.819 | 25 | Comparative 14 |

(continued)

| Steel No. | Slab Component (wt%) | | | Final Anneal Heating Rate (°C/s) | A* | B* | C* | D* | E* | Grain Size (μm) | Example |
|---|---|---|---|---|---|---|---|---|---|---|---|
| | C | N | S | | | | | | | | |
| 26 | 0.009 | 0.002 | 0.0025 | 32 | 1.71 | 2.55 | 1.66 | 0.848 | 0.824 | 22 | Comparative 15 |

* In Table 7, A* represents a rolling direction magnetic flux density $B_{50}$, B* represents a rolling direction iron loss $W_{15}/_{50}$, C* represents an average magnetic flux density $B_{50}$ in rolling and rolling vertical directions, D* represents a rolling direction $B_{50}/Bs$, E* represents a rolling direction and rolling vertical direction average magnetic flux density $B_{50}/Bs$.

As shown in Table 7 above, when amounts of C, S, and N without solid-state transformation increased, not only a grain size did not grow, but also magnetic domain movement was hindered, which worsens iron loss and a magnetic flux density.

(Example 5)

Slabs including, by weight, C: 0.002%, Si: 3.25%, Al: 0.037%, Sn: 0.19%, Mn: 0.1%, N: 0.0015%, S: 0.0017%, As 0.0034%, Bi 0.0025%, Cu: 0.007%, a balance of Fe, and other inevitable impurities were prepared. These slabs were reheated to 1150°C and then hot-rolled to a thickness of 2.3 mm to manufacture hot-rolled steel sheets. Subsequently, one of the hot-rolled steel sheets was hot-rolled at 1050°C without going through an intermediate cold-rolling process, and the remaining hot-rolled steel sheets were cold-rolled to a thickness of 0.7 mm, hot-rolled sheet annealed at 1050°C, and then cooled slowly to 750°C and air-cooled. And after the above air-cooled steel sheets were pickled, the final cold-rolling was performed to a thickness of 0.30 mm. Subsequently, the cold-rolled steel sheet was finally annealed under conditions shown in Table 8 below to manufacture electrical steel sheets.
Magnetism of the electrical steel sheet manufactured in this manner was measured, and after measuring in a rolling direction and a direction, perpendicular to the rolling, it was expressed as a rolling direction measurement value and an average value of two values, and results are shown in Table 9 below. In addition, an orientation fraction was calculated through EBSD measurement for a texture, and results are also shown in Table 9 below. In Table 9 below, iron loss $W_{15}/_{50}$ is an average iron loss in a rolling direction and a vertical direction when a magnetic flux density of 1.5 Tesla is induced at a frequency of 50 Hz, and a unit thereof was W/kg.

[Table 8]

| Steel No. | Manufacuring Process Conditions | | | | | Example |
|---|---|---|---|---|---|---|
| | Final Cold-Roll Reduction Ratio (%) | Final Anneal Temp. (°C) | Oxidation $P_{H2}/P_{H2O}$ Value | Final Anneal Time (sec) | Final Anneal Heating Rate (°C/s) | |
| 27 | 87(Anneal Hot-Rolled Sheet) | 1000 | 0.0008 | 250 | 35 | Comparative 16 |
| | 70 | 1000 | 0.0008 | 250 | 35 | Inventive 12 |
| | 57.1 | 1000 | 0.0008 | 250 | 35 | Inventive 13 |
| | 57.1 | 850 | 0.0008 | 250 | 35 | Comparative 17 |
| | 57.1 | 1050 | 0.0008 | 250 | 35 | Inventive 14 |
| | 57.1 | 1200 | 0.0008 | 250 | 35 | Comparative 18 |
| | 57.1 | 1000 | 0.0008 | 20 | 35 | Comparative 19 |
| | 57.1 | 1000 | 0.0008 | 1800 | 35 | Comparative 20 |
| | 57.1 | 1000 | 0.0008 | 250 | 3 | Comparative 21 |

[Table 9]

| Steel No. | A* | B* | C* | D* | E* | F* | G* | H* | I* | J* | Example |
|---|---|---|---|---|---|---|---|---|---|---|---|
| | 1.75 | 1.95 | 1.72 | 0.867 | 0.852 | 12 | 3.4 | 17 | 20 | 1.7 | Comparative 16 |
| | 1.77 | 1.75 | 1.73 | 0.877 | 0.857 | 34 | 22 | 14 | 17 | 8.3 | Inventive 12 |
| | 1.8 | 1.73 | 1.75 | 0.892 | 0.867 | 35 | 25 | 12 | 21 | 9 | Inventive 13 |
| | 1.73 | 2.3 | 1.7 | 0.857 | 0.843 | 29 | 18 | 12 | 22 | 3 | Comparative 17 |
| 27 | 1.79 | 1.74 | 1.74 | 0.887 | 0.862 | 38 | 21 | 21 | 24 | 17 | Inventive 14 |
| | 1.75 | 1.94 | 1.71 | 0.867 | 0.848 | 50 | 16 | 9 | 2 | 7 | Comparative 18 |
| | 1.73 | 2.21 | 1.7 | 0.857 | 0.843 | 25 | 11 | 14 | 26 | 3 | Comparative 18 |
| | 1.78 | 2.04 | 1.71 | 0.882 | 0.848 | 23 | 12 | 5 | 19 | 1 | Comparative 20 |
| | 1.74 | 2.11 | 1.72 | 0.862 | 0.852 | 26 | 8 | 14 | 11 | 0.5 | Comparative 21 |

*In Table 9, A* represents a rolling direction magnetic flux density $B_{50}$, B* represents a rolling direction iron loss $W_{15/50}$, C* represents an average magnetic flux density $B_{50}$ in rolling and rolling vertical directions, D* represents a rolling direction $B_{50}/Bs$, F* represents F{110}, G* represents F[Goss] (%), H* represents F{100}(%), I* represents F{111}(%), and J* represents a {100}<001> fraction.

As shown in Tables 8 and 9 above, it can be seen that iron loss and magnetic flux density are excellent when the final-annealing conditions fall within the scope of the present disclosure. That is, when the annealing temperature, heating rate, and annealing time fall within the scope of the present disclosure, it can be confirmed that the unidirectional iron loss and magnetic flux density are excellent and overall magnetism are also excellent.

When the final cold reduction ratio is low, it may be advantageous for Goss orientation growth, but when it is too low, productivity during annealing is too low and it may also be disadvantageous for formation of textures.

As described above, although the description has been made with reference to embodiments, it can be to be understood that those skilled in the art may modify and change the present disclosure in various manners within the scope of the basic idea of the present disclosure, and that the scope of the rights of the present disclosure should be interpreted based on the scope of the claims.

**Claims**

1. A non-oriented electrical steel sheet comprising:

   by weight, Si: 2.2 to 4.5%, Mn: 1.0% or less (excluding 0%), Al: 0.020 to 0.100%, Sn: 0.10 to 0.30%, As: 0.0005 to 0.0100%, Bi: 0.0005 to 0.0150%, C: 0.0050% or less (excluding 0%), S: 0.0030% or less, N: 0.0050% or less, a balance of Fe, and other inevitable impurities, and having F{110} of 30% or more, having F[Goss] of 20% or more, having F{100} of 10% or more, satisfying F[Goss] > F{100}, and having a grain size of 30 to 250 μm in a microstructure,
   if F{110} refers to a volume fraction of grains of which angle between a {110} plane and a surface of the steel sheet is 15° or less, F[Goss] refers to a volume fraction of grains of which angle formed with a Goss orientation is 15° or less, and F{100} refers to a volume fraction of grains of which angle between a {100} plane and the surface of the steel sheet is 15° or less.

2. The non-oriented electrical steel sheet of claim 1, satisfying that a volume fraction of grains of which orientation deviates from a {001}<001> orientation by 15° or less is 8% or more.

3. The non-oriented electrical steel sheet of claim 1, satisfying $B_{50}/B_s \geq 0.870$ in a rolling direction, if $B_{50}$ refers to a magnitude (Tesla) of magnetic flux density induced when a magnetic field of 5000 A/m is applied, and $B_S$ is a saturation magnetic flux density value.

4. The non-oriented electrical steel sheet of claim 1, satisfying $B_{50}/B_s \geq 0.855$ as an average value in a rolling direction and a rolling vertical direction, if $B_{50}$ refers to a magnitude (Tesla) of magnetic flux density induced when a magnetic field of 5000 A/m is applied, and $B_S$ is a saturation magnetic flux density value.

5. The non-oriented electrical steel sheet of claim 1, having a core loss of 1.76 W/kg or less in a rolling direction when a magnetic flux density of 1.5 Tesla is induced at a frequency of 50 Hz.

6. The non-oriented electrical steel sheet of claim 1, further including Cu: 0.015% or less.

7. A method for manufacturing a non-oriented electrical steel sheet, comprising:

providing a slab including, by weight, Si: 2.2 to 4.5%, Mn: 1.0% or less (excluding 0%), Al: 0.020 to 0.100%, Sn: 0.10 to 0.30%, As: 0.0005 to 0.0100%, Bi: 0.0005 to 0.0150%, C: 0.0050% or less (excluding 0%), S: 0.0030% or less, N: 0.0050% or less, a balance of Fe, and other inevitable impurities;
reheating and then rolling the slab in a range of 1050 to 1180°C to prepare a hot-rolled steel sheet;
cold-rolling and then annealing the hot-rolled steel sheet, or annealing the hot-rolled steel sheet without cold-rolling;
cold-rolling the annealed hot-rolled steel sheet to prepare a cold-rolled steel sheet; and
final-annealing the cold-rolled steel sheet,
wherein a reduction ratio during the cold-rolling of the annealed steel sheet is controlled to have a range of 50 to 85%,
during the final-annealing, a heating rate in a region including 300 to 850°C is controlled to have a range of 30°C/s or more, and annealing is continuously performed instead of batchwise in a coil state.

8. The method of claim 7, wherein the hot-rolled steel sheet annealing is performed in a range of 900 to 1,150°C.

9. The method of claim 7, wherein, during the final-annealing, an annealing temperature is 900 to 1,150°C and an annealing time is 30 to 600 seconds.

10. The method of claim 7, wherein, during the final-annealing, an atmosphere includes hydrogen and a degree of oxidation satisfies $P_{H2}/P_{H2O}$ -$\leq$ 0.015.

11. The method of claim 7, wherein the steel sheet in which the final-annealing has completed has F{110} of 30% or more, has F[Goss] of 20% or more, has F{100} of 10% or more, satisfies F[Goss] > F{100}, and has a grain size of 30 to 250 $\mu$m in a microstructure,
if F{110} refers to a volume fraction of grains of which angle between a {110} plane and a surface of the steel sheet is 15° or less, F[Goss] refers to a volume fraction of grains of which angle formed with a Goss orientation is 15° or less, and F{100} refers to a volume fraction of grains of which angle between a {100} plane and the surface of the steel sheet is 15° or less.

12. The method of claim 7, wherein the slab further includes Cu: 0.015% or less.

## INTERNATIONAL SEARCH REPORT

| International application No. |
|---|
| **PCT/KR2023/020821** |

### A. CLASSIFICATION OF SUBJECT MATTER

**C22C 38/02**(2006.01)i; **C22C 38/04**(2006.01)i; **C22C 38/06**(2006.01)i; **C22C 38/00**(2006.01)i; **C21D 8/12**(2006.01)i; **C21D 9/46**(2006.01)i

According to International Patent Classification (IPC) or to both national classification and IPC

### B. FIELDS SEARCHED

Minimum documentation searched (classification system followed by classification symbols)

C22C 38/02(2006.01); C21D 8/12(2006.01); C21D 9/00(2006.01); C22C 38/00(2006.01); C22C 38/38(2006.01); C22C 38/60(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무방향성(non-oriented), 전기강판(electrical steel sheet), 열간압연(hot rolling), 냉간압연(cold rolling), 주석(tin), 비소(arsenic), 비스무트(bismuth), 소둔(annealing)

### C. DOCUMENTS CONSIDERED TO BE RELEVANT

| Category* | Citation of document, with indication, where appropriate, of the relevant passages | Relevant to claim No. |
|---|---|---|
| Y | KR 10-2005-0018677 A (AK PROPERTIES, INC.) 23 February 2005 (2005-02-23)<br>See paragraphs [0019], [0058], [0067], [0072] and [0101] and claims 1 and 12-13. | 1-12 |
| Y | WO 2022-210864 A1 (NIPPON STEEL CORPORATION) 06 October 2022 (2022-10-06)<br>See paragraphs [0073], [0076], [0078] and [0084], claims 4-5 and table 2. | 1-12 |
| A | KR 10-2019-0078155 A (POSCO) 04 July 2019 (2019-07-04)<br>See paragraph [0104] and claims 1 and 5-7. | 1-12 |
| A | JP 6593555 B2 (NIPPON STEEL CORPORATION) 23 October 2019 (2019-10-23)<br>See paragraph [0076] and claims 1-2. | 1-12 |
| A | US 5482107 A (JUDD, Robert R.) 09 January 1996 (1996-01-09)<br>See claims 1-2 and 17. | 1-12 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 March 2024** | **19 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/020821**

| Patent document cited in search report | | | Publication date (day/month/year) | Patent family member(s) | | | Publication date (day/month/year) |
|---|---|---|---|---|---|---|---|
| KR | 10-2005-0018677 | A | 23 February 2005 | AU | 2003-216420 | A1 | 11 November 2003 |
| | | | | CA | 2484738 | A1 | 20 November 2003 |
| | | | | CA | 2484738 | C | 26 January 2010 |
| | | | | CN | 100475982 | C | 08 April 2009 |
| | | | | CN | 1665943 | A | 07 September 2005 |
| | | | | EP | 1501951 | A1 | 02 February 2005 |
| | | | | EP | 1501951 | B1 | 30 August 2006 |
| | | | | EP | 1501951 | B2 | 28 August 2013 |
| | | | | JP | 2006-501361 | A | 12 January 2006 |
| | | | | JP | 2011-094233 | A | 12 May 2011 |
| | | | | JP | 5351870 | B2 | 27 November 2013 |
| | | | | KR | 10-2010-0072376 | A | 30 June 2010 |
| | | | | WO | 03-095684 | A1 | 20 November 2003 |
| WO | 2022-210864 | A1 | 06 October 2022 | BR | 112023019274 | A2 | 24 October 2023 |
| | | | | CN | 117157420 | A | 01 December 2023 |
| | | | | EP | 4317473 | A1 | 07 February 2024 |
| | | | | JP | 7231115 | B2 | 01 March 2023 |
| | | | | JP | WO2022-210864 | A1 | 06 October 2022 |
| | | | | KR | 10-2023-0140602 | A | 06 October 2023 |
| | | | | TW | 202246544 | A | 01 December 2022 |
| | | | | TW | I799219 | B | 11 April 2023 |
| KR | 10-2019-0078155 | A | 04 July 2019 | CN | 111511948 | A | 07 August 2020 |
| | | | | EP | 3733891 | A1 | 04 November 2020 |
| | | | | JP | 2021-509154 | A | 18 March 2021 |
| | | | | JP | 7153076 | B2 | 13 October 2022 |
| | | | | KR | 10-2009392 | B1 | 09 August 2019 |
| | | | | US | 11408041 | B2 | 09 August 2022 |
| | | | | US | 2021-0062281 | A1 | 04 March 2021 |
| | | | | WO | 2019-132129 | A1 | 04 July 2019 |
| JP | 6593555 | B2 | 23 October 2019 | BR | 112019009507 | A2 | 30 July 2019 |
| | | | | BR | 112019009507 | B1 | 11 April 2023 |
| | | | | CN | 110121567 | A | 13 August 2019 |
| | | | | CN | 110121567 | B | 27 July 2021 |
| | | | | EP | 3569726 | A1 | 20 November 2019 |
| | | | | EP | 3569726 | B1 | 11 May 2022 |
| | | | | JP | WO2018-131710 | A1 | 19 July 2018 |
| | | | | KR | 10-2019-0092499 | A | 07 August 2019 |
| | | | | KR | 10-2259136 | B1 | 01 June 2021 |
| | | | | PL | 3569726 | T3 | 01 August 2022 |
| | | | | TW | 201829802 | A | 16 August 2018 |
| | | | | TW | I641703 | B | 21 November 2018 |
| | | | | US | 11021771 | B2 | 01 June 2021 |
| | | | | US | 2019-0316221 | A1 | 17 October 2019 |
| US | 5482107 | A | 09 January 1996 | CA | 2126724 | A1 | 05 August 1995 |

Form PCT/ISA/210 (patent family annex) (July 2022)

**EP 4 640 879 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101203791
- KR 101227767
- KR 100797895